# EUROPEAN PATENT SPECIFICATION

(11) **EP 4 545 279 B1**
(45) Date of publication and mention of the grant of the patent: **02.12.2026**
(21) Application number: 24208851.6
(22) Date of filing: 25.10.2024
(51) Int. Cl.: B29C 65/14, B29C 65/18, B29C 65/24, B29C 65/30, B29C 65/48, B29C 65/78, B65B 25/14, B29L 31/00, B65B 51/10

(54) **SEALING MACHINE**
SIEGELMASCHINE
MACHINE DE SCELLAGE

(30) Priority: 26.10.2023 IT 202300022443
(43) Date of publication of application: 30.04.2025
(73) Proprietor: Valmet Tissue Converting S.p.A., 55100 Lucca (IT)
(72) Inventor: BOLOGNESI, Daniele, 40064 Ozzano dell'Emilia (BO) (IT)
(74) Representative: Mannucci, Michele

(56) References cited:
- US-A- 3 164 938
- US-A1- 2023 141 479
- US-B2- 11 691 353

## Description

### Technical Field

The present invention relates to the field of paper product packaging by means of heat-sealable plastic films or paper films provided with heat-sealable adhesive; more particularly, the object of the invention is a sealing machine for sealing packages of products wrapped in films provided with at least one heat-sealable part.

A further object of the invention is a method for sealing packages of products wrapped in films provided with at least one heat-sealable part, which can also be implemented by said sealing machine.

### State of the Art

As it is well known, in the paper industry, the paper products, for example toilet rolls, kitchen towel rolls, napkins, and handkerchiefs, are typically wrapped in sheets of thermoplastic film or, in the case of single rolls, in paper sheets. Packs containing a single roll are usually used for toilet rolls, while multi-roll packs, packaged with heat-sealable films, are used for both toilet rolls and kitchen towel rolls. Generally, the single-roll packs wrapped in paper film are not sealed, while larger packs, wrapped in thermoplastic film or paper sheet, are thermally sealed.

To make these packs, the packaging machines have conveyors that, in the case of multi-roll packs, feed rows of rolls, arranged coaxially with one another with horizontal axis, to a station for grouping the rolls and forming a group of rolls arranged side by side in one or more layers. The groups of rolls are then conveyed to a vertically moving elevator that lifts each group of rolls to a wrapping station. The wrapping station wraps the group of rolls in a wrapping film or sheet, completing the pack of rolls. An example of these packaging machines is disclosed in the patent documents WO2009060490 and EP12289669B1. This type of packaging is called primary packaging and is that typically used for retail. The resulting packs are conveyed to the secondary packaging, where they are grouped and bagged in large plastic bags. Examples of these packaging machines are disclosed in EP1442984, EP1771335. Finally, the bags containing the packs are placed on pallets and sent to warehouses or shipped directly to distributors.

In general, the groups of rolls are packaged by wrapping a thermoplastic wrapping film, such as polyethylene or other synthetic polymers, around a group of rolls, wrapping it around the four sides and forming a kind of parallelepiped with rectangular faces open on two opposite side faces. Then, the side flaps of the sheet projecting from the two side faces are folded, thus completing the covering of the rolls. Finally, the folds of the thermoplastic film are stabilized by sealing made in a sealing machine that may include heated Teflon-coated belts, as shown for example in EP1381543B1, or even heating sealing plates. In the case of single rolls or groups of rolls to be packaged with paper sheets, the heated Teflon-coated belts, or the sealing plates, heat-activate an adhesive, with which the sheets are pretreated on the whole surface.

The prior art sealing plates generally consist of a single-piece rectangular plate made of metal, e.g., steel, on the upper end of which a blind hole is drilled toward the center of the plate, in which an electrical resistor, e.g., in the form of a cylindrical cartridge, is inserted. Obviously, the electrical resistor is smaller than the hole, and the resulting clearance makes heat transfer between resistor and plate less efficient. To reduce this effect, conductive paste can be inserted inside the hole, but the conductive performance of this paste over time tends to decrease. The reduction in conductive yield greatly increases the probability of failure of the resistors, because heat can no longer be dissipated efficiently through the sealing plate. In addition, in these types of sealing plates, the heat distribution produced by the electrical resistors is not uniform as the electrical resistors inserted into the blind holes are cylindrical, and therefore the rectangular sealing surface of the plate heats only along the area affected by the cylindrical electrical resistor. In this way, since the width of the plate is much greater than the diameter of the cylindrical electrical resistor, the area, or band, at the cylindrical electrical resistor is heated more, while the side bands remain cooler.

The coupling of the electrical resistor into the hole is essentially irreversible, that is, if the resistor breaks, it essentially cannot be replaced, except with expensive operations. It is much more cost-effective to replace the entire plate with a new one containing a new working resistor.

Additionally, the prior-art sealing plates tend to transfer heat also to areas of the machine not involved in sealing packages, this resulting in serious energy inefficiencies and possible problems due to the heating of components of the sealing device that are not suitable for high temperatures.

Furthermore, these plates are designed with high height in order to fit a wide variety of package sizes. In the case of sealing small packages, this oversizing of the the plates necessarily leads to wasted heat, and thus energy. Sealing means are disclosed also in documents US2023/141479A1, US3164938A and US11691353B2.

### Summary

The task of the present invention is to solve the problems of prior art sealing machines for sealing packages of paper products wrapped in plastic or paper films, particularly related to energy waste.

Within this task, an important object of the present invention is to provide a sealing machine for sealing packages of products wrapped in films provided with at least one heat-sealable part, which allows for optimal thermal yield.

A further important object of the present invention is to provide a sealing machine for sealing packages of products wrapped in films provided with at least one heat-sealable part, which is flexible in operation.

A further important object of the present invention is to provide a sealing machine for sealing packages of products wrapped in films provided with at least one heat-sealable part, which is easy to manufacture, assemble or maintain.

An additional important object of the present invention is to provide a method for sealing packages of products wrapped in films provided with at least one heat-sealable part, which is simple and easily achievable with the known technologies, and which allows for optimal thermal yield.

These and other objects, which will become clearer later, are achieved with a a sealing machine for sealing packages of products wrapped in films provided with at least one heat-sealable part, the machine comprising
- on at least one side of the feed channel, at least two sealing bands, or areas, specifically a lower sealing band and an upper sealing band arranged at a greater height than the lower sealing band, both extending parallel to the feeding direction of the products in the feed channel,
- for each sealing band, at least one resistor element adapted to heat the sealing band,
- a control unit operationally connected to the resistor elements, adapted to enable power supply of the resistor elements of the sealing bands, so as to heat a single band or several bands simultaneously depending on the height of the sealing face to be obtained.

With such a configuration of the sealing machine, it is possible to heat the packages in a discretized manner, depending on the height of the packages, using a sealing face, i.e., a heating face sized approximately to the size of the packages, reducing the waste of thermal energy.

The films that can be sealed by the sealing member are films made of heat-sealable plastic material, or films made of not heat-sealable material (e.g., a paper film, i.e., a paper sheet) but provided with a heat-sealable part, for example, a paper part where there is sealing material (e.g., adhesive) that is heat-sealable when subjected to heating, i.e., that can be thermally activated so that two overlapping portions of film, between which the sealing material is arranged, can be joined together.

Preferably, at least one side of the feed channel includes at least one sealing member provided with at least one portion of heating plate, with which there is associated at least one resistor element adapted to heat the heating plate portion, and wherein the at least one heating plate portion defines a respective portion of sealing band.

The heating plate, or plates, is appropriately made of metal, e.g., aluminum, steel, or alloys thereof.

Preferably, at least one side of the feed channel comprises a plurality of sealing members arranged side by side and successively along the feed channel, on each sealing member being defined a respective portion of sealing band, so that each sealing member comprises at least one portion of lower sealing band and at least one portion of upper sealing band. This configuration with a plurality of sealing members arranged side by side allows for high design flexibility of the machine as well as ease of maintenance.

Alternatively, the side of the feed channel may comprise a single sealing member extending along the feed channel, wherein the sealing bands are defined on the single sealing member. In this case, the thermal yield is somewhat more uniform and machine assembly is potentially faster.

In preferred embodiments, one sealing member comprises a single heating plate, with which a plurality of resistor elements is associated.

Therefore, in combination with the embodiments described above, one side of the channel of the machine may include, for example, a single sealing member with a single plate provided with multiple resistor elements defining the sealing bands, or it may include, for example, a plurality of sealing members arranged side by side, each of which is provided with a plate provided with multiple resistor elements defining portions of sealing bands.

In further preferred embodiments, the at least one sealing member includes a plurality of stacked heating plates, the heating plates collectively forming the sealing bands; in this configuration, at least one resistor element is associated with each heating plate.

In this latter embodiment, the plates at the same height of adjacent sealing members can form, for example, the portions of a same sealing band.

From a different point of view, the sealing machine comprises one or more heating plates and a plurality of resistor elements associated with respective portions of one or more heating plates, wherein the resistor elements are arranged in a matrix along one side of the feed channel, and wherein the resistor elements of a row of the matrix distribution correspond to the resistor elements operating in a respective sealing band.

In a preferred embodiment, at least three, preferably exactly three, stacked sealing bands are provided on at least one side of the feed channel, specifically a lower sealing band, an upper sealing band arranged at a greater height than the lower sealing band, and an intermediate sealing band arranged at a height between the lower and the upper sealing bands.

In preferred embodiments, the machine includes at least one temperature sensor, preferably at least one temperature sensor for each sealing band.

In the preferred embodiments, both sides of the feed channel include the stacked sealing bands.

In preferred embodiments, the at least one sealing member is fastened to a support structure, preferably through the interposition of elastic means adapted to act in a direction transverse to the feed direction along the channel, so that the at least one sealing member is adapted to push the products moving along the channel according to the transverse direction.

In preferred embodiments, the at least one sealing member includes a front face, facing the center of the feed channel, and an opposite back face; at least one resistor element associated with the sealing member includes at least one electrical connection terminal protruding from the opposite back face, or from a side edge or a top edge of the sealing member or of the heating plate portion.

In preferred embodiments, the control unit is so programmed as to enable power supply of the resistor elements of the sealing bands, so as to heat, depending on the height of the packages to be sealed, only the lower sealing band, or multiple sealing bands at the same time, arranged adjacent over one another, including the lower sealing band.

The control unit may be an electronic unit of various types and may include, or be integrated into, a PLC or other electronic control device for industrial automation. The control unit may also be of a simple, non-electronic type, for example, consist of one or more manual, or controlled, switches that enable and/or prevent the power supply of the resistor elements.

In preferred embodiments, the sealing machine includes, for at least one side of the feed channel, an interface element arranged between the sealing bands and the part of the package to be sealed; the interface element is preferably movable along the package feeding direction; the interface element is preferably a belt closed in a loop and driven between guide members; the belt is preferably a low friction belt, for example a Teflon-coated belt.

In preferred embodiments, the sealing machine comprises a table for package handling and two opposite operating sides that delimit, with the handling table, the feed channel, within which the packages of products wrapped in films move forward; the handling table is preferably an active table, i.e. it moves to move the packages, the handling table preferably consists of the upper section of a conveyor belt.

According to a further aspect, the invention also relates to a sealing method for sealing packages of products wrapped in films provided with at least one heat-sealable part, the method providing for the use of a sealing machine for sealing packages of products wrapped in films provided with at least one heat-sealable part, wherein the machine includes:
- a feed channel for the products wrapped in films;
- on at least one side of the feed channel, at least two sealing bands, specifically a lower sealing band and an upper sealing band arranged at a greater height than the lower sealing band, both extending parallel to the feeding direction of the products in the feed channel,
- for each sealing band, at least one resistor element adapted to heat the sealing band,
- a control unit operationally connected to the resistor elements, adapted to enable power supply of the resistor elements of the sealing bands,
the method comprising the steps of
- identifying the size of a set of packages to be sealed,
- setting, in the control unit, the number of sealing bands to be electrically supplied, wherein the setting allows to supply electrical power to only one sealing band or to multiple sealing bands,
- feeding the channel with packages to be sealed.

Preferably, the sealing method provides for programming the control unit so as to enable power supply of the resistor elements of the sealing bands, so as to heat, depending on the height of the packages to be sealed
- only the lower sealing band, or
- multiple sealing bands at the same time, arranged adjacent over one another, including the lower sealing band,
so as to heat a single sealing band or several sealing bands simultaneously depending on the height of the packages to be sealed.

Preferably, the sealing method provides for measuring the temperature of at least one sealing band, preferably of all electrically powered sealing bands, and adjusting the temperature of the sealing bands based on the detected temperature and/or not feeding the feed channel with packages if the detected temperature is not in accordance with the expected sealing temperature.

Preferably, according to some embodiments, at least one sealing member includes
- a heating plate with monolithic metal structure, preferably provided with an outer face adapted to face the package part to be sealed,
- at least one resistor element comprising a first electrical connection part and a second heating part,
wherein the at least one resistor element is embedded, at least as regards the second part, in the monolithic structure of the heating plate, wherein the monolithic structure of the plate is completely in contact with the second part of the resistor element.

This construction allows for optimal contact between the resistor element and the sealing plate.

Preferably, the surface of the monolithic structure of the heating plate in contact with the second part of the at least one resistor element is a negative mold impression of the second part of the at least one resistor element.

"Mold impression" means a negative mold that exactly copies the shape of the second part of the resistor element.

For example, the heating plate is formed inside a forming mold, wherein the at least one resistor element is arranged in the forming mold.

The type of mold forming can be various. For example, the heating plate is made by sintering in mold or casting in mold, and subsequent cooling.

Preferably, the heating plate has an outer side, on which at least one portion of the first electrical connection part of the at least one resistor element is provided, further, between the outer side and the second part of the at least one resistor element is interposed a portion of the monolithic structure of the plate that hinders the movement of the second part toward the outer side.

In practice, the plate monolithic structure forms an undercut for a portion of the second part of the resistor element in the direction toward the outer side on which there is at least one portion of the first electrical connection part of the resistor element.

According to some embodiments, the second part of the at least one resistor element has a linear shape and comprises an initial section extending from an outer side of the heating plate, at least a second concave section facing the outer side, on which at least a portion of the first electrical connection part is provided, and a final section extending toward an outer side of the plate.

The second part of the resistor element can be in the form of single- or multi-turn coil.

In some embodiments, at least one channel is provided within the plate monolithic structure, the channel being provided with at least one outlet on the outer surface of the plate; the at least one resistor element is housed and locked in the channel.

In other embodiments, the resistor element can be of the cartridge type, coil type, ceramic plate type, etc.

The resistor element may include one or more resistance wires (heated by the Joule effect), possibly suitably electrically insulated through, for example, a dielectric insulation.

The first part of the at least one resistor element has at least one electrical terminal, or one electrical cable, exiting from a peripheral end edge of the resistor element (e.g., an upper edge or a lower edge), or from the face of the plate opposite the face to be directed toward the packages to be sealed.

Preferably, according to some embodiments, at least one sealing member includes
- at least one heating plate provided with an outer face, adapted to face the package part to be sealed, and an opposite inner face,
- at least one resistor element adapted to touch the inner face of the heating plate,
- one closing body arranged opposite the heating plate with respect to the resistor element,
- at least one fastener between the heating plate and the closing body, so that the at least one resistor element is sandwiched between the closing body and the heating plate.

This construction allows for optimal contact between the resistor element and the sealing plate.

Preferably, the resistor element has a flat conformation, for example provided with two opposite quadrangular faces, preferably flat and adapted to face the heating plate and the closing body respectively.

According to preferred embodiments, the resistor element has at least one resistive member integrated within a ceramic body. More preferably, the resistor element preferably has at least one resistive member in the form of a resistive filament embedded in a ceramic body that is in turn coated by a ceramic insulation, for example made of ceramic fiber.

The resistor element is therefore preferably electrically insulated.

According to preferred embodiments, the heating plate includes at least one pocket counter-shaped to the resistor element to allow housing the resistor element, at least partially.

Preferably, the at least one pocket is completely provided on the heating plate and includes a flat contact surface, touching the flat face of the at least one resistor element, and side flanks for containing the at least one resistor element, preferably touching the at least one resistor element.

According to preferred embodiments, the closing body includes at least one pocket counter-shaped to the resistor element to allow housing the resistor element, at least partially. Preferably, the pocket of the closing body includes a flat contact surface, touching a flat face of the at least one resistor element opposite that facing the heating plate.

According to preferred embodiments, both the heating plate and the closing body include at least one respective pocket counter-shaped to the resistor element to allow housing, at least partially, a respective portion of the resistor element.

As mentioned above, only one resistor element or more than one resistor element may be provided for a heating plate; in this case on the plate (and/or on the closing body) several pockets are provided, counter-shaped at least partially to respective resistor elements.

Only one closing body may be provided either in case there is a single resistor element or in case there are several resistor elements. It is also possible that more than one closing body are provided, for example one body for each resistor element (it is also possible that the closing body for a single resistor element consists of two or more separate parts, i.e., a body not in a single piece).

The at least one resistor element has at least one electrical terminal, or one electrical cable, exiting from a peripheral end edge of the resistor element (e.g., an upper edge or a lower edge), or from a flat face of the resistor element facing the closing body.

According to preferred embodiments, the at least one fastener is adapted to push the heating plate and the closing body onto opposite sides of the at least one resistor element, so that the at least one resistor element is sandwiched between the closing body and the heating plate.

According to preferred embodiments, the at least one fastener between the heating plate and the closing body is of reversible type. The term "reversible" indicates, for example, a fastening system that allows, without destructive operations or complex disassembly, the two fastened parts to be separated. A reversible fastening system may include, for example, coupling systems by threaded or screw systems, hook and loop, snap-on, insertion coupling systems, bayonet coupling systems, etc. Non-reversible systems include, for example, systems for coupling by welding, bonding, hot or cold interference, etc.

For example, the at least one reversible fastener is a threaded element adapted to couple to a nut-screw portion; for example, the at least one reversible fastener is a screw passing through the closing body (or through the plate) and adapted to grip in a threaded hole provided on the plate (or the closing body), or on a nut.

Reversible fastening allows optimal maintenance of the sealing member.

According to preferred embodiments, the heating plate is made of metal, preferably aluminum or an alloy thereof.

According to preferred embodiments, the closing body is made of thermal insulating material, such as: resins, plastics, polymeric or elastomeric materials, mineral or glass fiber materials, resins (e.g., phenolic, epoxy, silicone, polyurethane resins), glass (e.g., cellular type), aerogels, or a combination thereof. In this way, the thermal effect of the resistor element is maximized toward the heating plate.

### Brief description of the drawing

The invention will be better understood by following the description below and the attached drawing, showing some non-limiting embodiments of the invention. More particularly, in the drawing:
Fig. 1 is an axonometric schematic view of a sealing machine according to the invention;
Fig. 2 is a schematic plan view of a sealing machine according to the invention, corresponding to the case of Fig. 1;
Fig. 3 is a schematic axonometric front view of an operating side of a feed channel of the sealing machine of Figs. 1 and 2, within which the packages of products wrapped in films move, wherein the side is provided with three sealing members;
Fig. 4 is a schematic axonometric front view of an operating side, that is a variant of that of the previous figure;
Fig. 5 is a schematic axonometric front view of an operating side, that is a variant of that of the previous figures;
Fig. 6 is a schematic axonometric front view of an operating side, that is a variant of that of the previous figures;
Fig. 7 is a schematic plan view of a sealing machine according to the invention, with operating sides that are a variant of those of the previous figures;
Fig. 8 is an schematic axonometric view of a heating plate portion of a sealing member usable in sealing machines according to the invention;
Fig. 9 is a schematic axonometric view of a heating plate portion of a sealing member usable in machines according to the invention, a variant of the previous figure;
Fig. 10 is a schematic axonometric view of a heating plate portion of a sealing member usable in machines according to the invention, a variant of the previous figures;
Fig. 11 is an schematic axonometric exploded view of a portion of a sealing member usable in sealing machines according to the invention, a variant of the previous figures;
Fig. 12 is a schematic side view, in cross section, of a sealing member similar to that of the previous figure.

### Detailed description of embodiments

With reference to the figures, number 100 indicates, as a whole, a sealing machine for sealing packages of products wrapped in films according to the invention.

The sealing machine 100 includes, for example, a frame 101, which supports a handling table 102 for packages C of products wrapped in a film, in this example a paper sheet provided with parts with sealing material, e.g., heat-activated adhesive. The handling table 102 defines a handling direction X for the packages C.

The frame 101 also supports two opposite operating sides 103 that delimit, with the handling table 102, a feed channel 104, within which the packages of products wrapped in films move forward.

In this example, the handling plane 102 is an active plane, i.e., it moves to move the products. For example, the handling table consists of the upper section of a motorized conveyor belt 105, e.g., of the type closed in a loop, wherein the lower section 105A defines the return section of the conveyor belt.

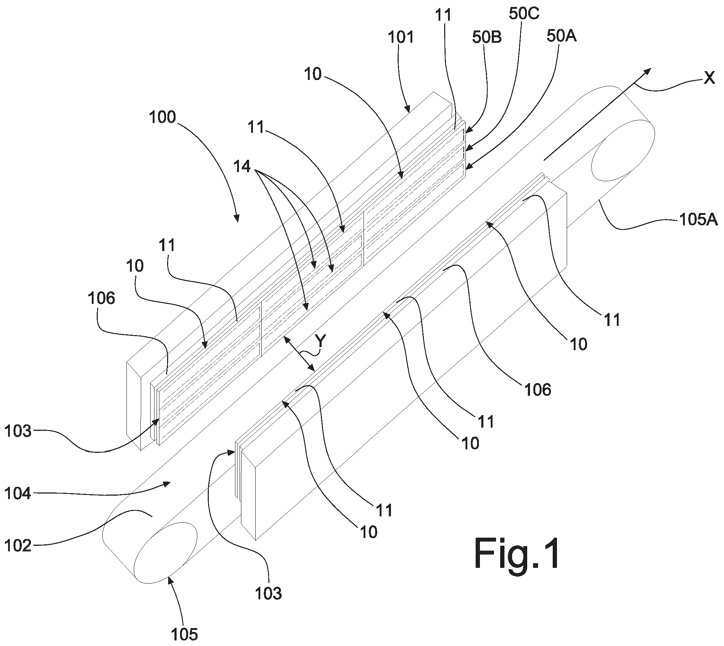

The operating sides 103 define the sides of the channel 104 and each of them is formed by a plurality of sealing members 10 adjacent to one another (in Figures 1, 2, and 3, three adjacent sealing members 10 are shown), which, by heating, heat-seal the parts of the paper sheets wrapping the packages C provided with heat-activated adhesive. Preferably, adjacent sealing members define a sealing area formed by substantially coplanar surfaces.

As mentioned, the frame 101 supports the two opposite operating sides 103 provided with the sealing members 10. The sealing members 10 are supported by a support structure 106 associated with the frame 101, which allows their movement along Y, i.e., along a direction transverse (preferably orthogonal) to the feeding direction X, that is, the sealing members 10 can move toward the center of the channel 104.

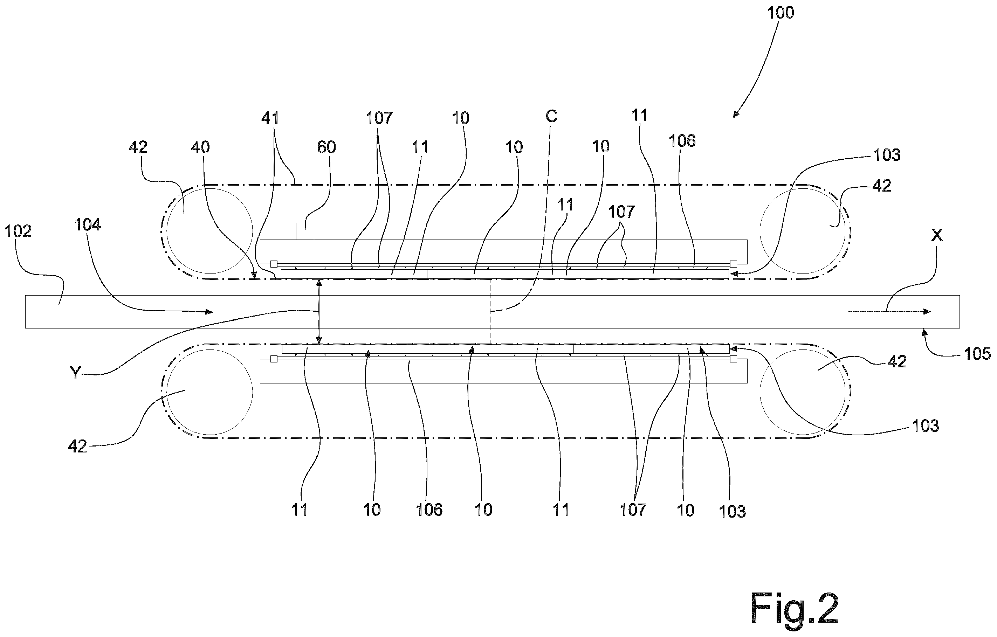

Appropriately, elastic means 107 are provided (shown in the example in Fig. 2) adapted to act in the transverse direction Y, so that the sealing members 10 push onto the products, according to this transverse direction Y, when they move along the channel 104. For example, the support structure 106 extends along the channel, and elastic means 107, e.g., springs, acting along Y and interposed between the frame 101 and the members 10, extend from the structure. From an operational point of view, the distance between the support structures 106 of the two sides of the channel 104 is preferably adjustable according to the width of the packages C moving forward in the feed channel 104. Appropriately, this distance is preferably such that there is always some pressure exerted by the sealing members 10 on the sides of the packages thanks to the elastic means 107.

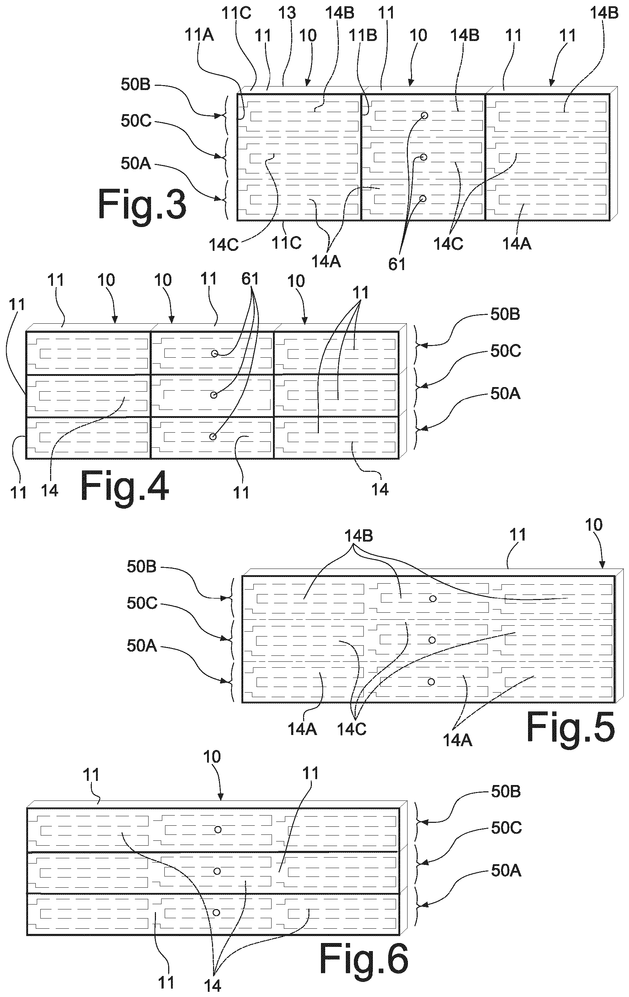

In this example, each sealing member 10 includes a heating plate 11, for example rectangular, which has a monolithic structure, that is, it is made in a single piece. The heating plate is made, for example, of aluminum. The plate has six outer sides, which include, for example, an outer face 12, facing the part of the package to be sealed, an opposite inner face 13, two side edges 11A-11B and two end edges 11C, respectively an upper and a lower end edges, as shown in the diagram in Fig. 3, where the outer sides of the plate are shown only for the first plate to the left of the group of three plates 11 forming the three sealing members arranged side by side.

In some preferred embodiments, the outer face 12 is in contact with an interface element 40 provided between each sealing member and the part of the package to be sealed. The interface element 40 shall transfer heat from the sealing members 10 to the packages C and at the same time, preferably, prevent the heat-sealed material from sticking to or soiling the sealing members 10 when plastic wrapping sheets are used. Advantageously, the interface element can be movable to follow the packages C along the handling direction X, thus helping the conveyor belt 105. For example, the interface element 40 may be a belt 41 with low friction coefficient and/or high anti-adhesion degree, as well as high resistance to high temperatures, such as a Teflon-coated belt, or a belt made of any other material suitable for the use, having preferably the same height as the heating plates 11. Preferably, as schematized in Fig. 2, the Teflon-coated belt 41 can be moved between two return members or rollers 42, one of which is motorized, for example, at a synchronous speed with the conveyor belt 105 to help the conveyor belt 105 to move the packages C along the handling direction X. The interface element may be provided both when the wrapping sheet is a paper sheet and when it is a plastic sheet.

In other examples, the heating plates make direct contact with the package to be sealed (in Fig. 1, the belt 41 is not shown).

The sealing member 10 also includes a plurality of resistor elements 14 touching the plate 11.

For example, as clearly shown in Fig. 3, a lower resistor element 14A in contact with a lower part of the heating plate 11, an upper resistor element 14B in contact with an upper part of the heating plate 11, and an intermediate resistor element 14C in contact with an intermediate part of the heating plate, between the lower and upper resistor elements 14A and 14B, are provided.

Each of the lower, intermediate, and upper parts of the adjacent heating plates 11 forms a respective portion of a machine heating band, hereafter referred to as a sealing band.

Therefore, stacked sealing bands are provided along each side 103 of the feed channel 104, specifically a lower sealing band 50A, an upper sealing band 50B and an intermediate sealing band 50C arranged between the sealing band 50A and the sealing band 50B. The resistor elements are adapted to heat the sealing bands.

The machine includes a control unit 60, for example, integrated into a PLC system, operationally connected to the resistor elements 14A, 14B, 14C that heat the respective portions 51A', 51B', and 51C' of the sealing bands 50A, 50B, 50C. The control unit 60 is adapted to enable power supply of the resistor elements of the sealing bands, so as to heat a single band or multiple bands simultaneously depending on the height of the sealing face to be obtained (all the portions of a same band are always powered, or not powered, at the same time,).

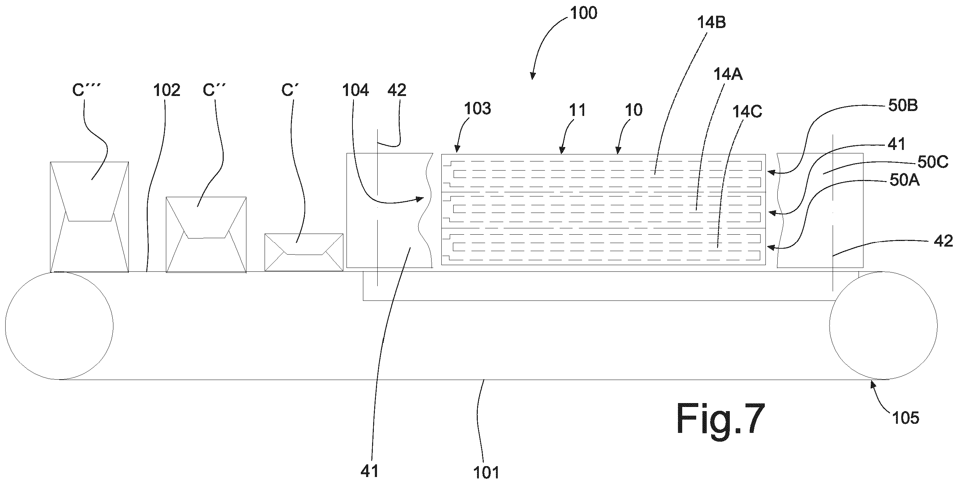

From an operational point of view, the control unit 60 is so programmed as to enable power supply of the resistor elements 14A, 14B, 14C of the sealing bands 50A, 50B, 50C, so as to heat, depending on the height of the packages to be sealed, only the lower sealing band 50A (for sealing packages C' of reduced height, as highlighted for example in Fig.7), or multiple sealing bands at the same time, arranged adjacent over one another, including the lower sealing band 50A. The resistor elements of a sealing band are always powered at the same time, as if it were basically a single resistor element.

For example, it is possible to simultaneously power only the resistor elements 14A and 14B to heat only the lower and intermediate band 50A-50C, for example for sealing packages C" of medium height (or a batch of packages comprised of packages C' of low height and of medium height C"), or it is possible to simultaneously power all the resistor elements 14A, 14B, 14C to simultaneously heat all sealing bands 50A, 50B, 50C, for example for sealing packages C‴ of high height (or a batch of packages comprised of packages of different heights, or a batch of packages comprised of packages of low height and high height, or medium height and high height, or low, medium and high height).

In other uses, the control unit 60 is so programmed as to heat also the resistor elements of the intermediate and/or upper band, without heating those of the lower sealing band, for example, for sealing specific areas of a package.

Temperature sensors 61 are appropriately provided, associated with the sealing bands 50A, 50B, 50C of the two sides of the feed channel 104. For example, a temperature sensor 61 is provided for each band 50A, 50B, 50C. The sensors are in contact with the respective heating plates 11A, 11B and 11C and are operationally connected with the control unit 60.

A sealing method that can be used with such a machine provides for example, before the actual sealing phase begins, for identifying the size of a set of packages C to be sealed, and then setting in the control unit 60 the number of sealing bands 50A, 50B, 50C to be powered, for example, only the lower bands 50A (for packages of low height), or the lower and intermediate bands 50A and 50B (for packages of medium height), or all available bands (for packages of high height).

Then power is supplied to the sealing bands (the sealing members 10 are operationally connected to a 240V power supply, for example; the resistor elements have a deliverable power comprised, for example, between 500W and 3000W each, and each sealing member therefore has a deliverable power comprised between 1500W and 9000W in the case of three resistor elements) and, using the temperature sensors 61, the sealing bands are checked for having achieved the operating temperature, which can be up to 250°C. The operating temperature is not always the same and can vary depending on the material of the wrapping sheets of the packages C and/or the production speed of the packaging machine. For example, to higher production speeds (and thus shorter times for the packages C for moving along the feed channel 104) may correspond a higher temperature of the sealing bands.

Then, when the operating temperature has been achieved, the feed channel 104 can be fed with packages C to be sealed.

The packages are moved by the conveyor belt 105 and are pressed laterally by the sealing members (through the elastic means 107) that push on the Teflon-coated belt 41 touching the packages. During this movement, the packages are sealed thanks to the heat emitted by the sealing bands.

Variants of the sealing members are shown in Figs. 4, 5, 6, and 7. With reference to a single side 103 of the channel, Fig. 7 shows a side diagram of the sealing machine in the case where only a single sealing member 10 is provided, comprising a single heating plate 11, wherein only three resistor elements 14A, 14B, 14C are provided, one for each sealing band, so that there is only one resistor element that extends for a portion of the sealing band coinciding with the entire sealing band.

Fig. 5 shows the case of a single sealing member including a single heating plate 11, wherein nine resistor elements are provided, three for each sealing band (three elements 14A, three elements 14B and three elements 14C). The resistor elements could even be only two for each band, for a total of six resistor elements, or more than three. A sealing band includes three portions of a same sealing band with respective resistor elements.

Fig.4 shows the case of three sealing members arranged side-by-side, each of which is formed by three respective plates 11 arranged over one another and in contact with one other along the edges, wherein each plate 11 includes a respective resistor element 14, so that each plate forms with the respective resistor element a portion of a respective sealing band.

Fig.6 shows the case of a single sealing member 10 formed by plates 11 (in this case, three plates) that extend along the entire side 103 and are arranged overlapping one another, and each forms a respective sealing band 50A, 50B and 50C. In the example of Fig. 6, three resistor elements 14 are provided, associated with each longitudinal plate 11, but of course the number can be the most convenient, starting from a single resistor element extending along the entire length of the longitudinal plate 11 (similarly the case of the bands in Fig.7).

Note that in all the examples above, the resistor elements are in practice arranged in a matrix along one side of the feed channel, and the resistor elements of a row of the matrix distribution correspond to the resistor elements operating in a respective sealing band.

The heating plate/resistor element combination can be the most varied. For example, it can be of the type known in the state of the art, such as a resistive cartridge inserted into a hole provided in the plate, with the interposition of conductive paste, if necessary.

In an innovative way, in a first example, the resistor element 14 includes a first electrical connection part 15, which includes, for example, one or more electrical terminals, e.g., two electrical terminals 15A, exiting from the plate 11, and a second heating part 16, embedded in the monolithic structure of the plate 11, adapted to heat up by Joule effect when connected to a power source S. It is clear that wires can be provided instead of the electrical terminals, directly exiting from the resistor element 14.

As mentioned, the second part 16 of the resistor element 14 is embedded in the monolithic structure of the plate, which means that this second part is completely in contact with the monolithic structure of the plate 11, that is, there are no external surface areas of the second part 16 that are not in contact with the plate 11.

In practice, the surface of the monolithic structure of the heating plate 11 in contact with the second part 16 of the resistor element is a negative mold impression of the second part 16, i.e., it is a negative mold that exactly copies the shape of the second part of the resistor element 14.

For achieving such a coupling between heating plate 11 and resistor element 14 of this type, a method can be advantageously provided including the steps of preparing a forming mold with an internal shape corresponding to the heating plate, inserting the resistor element 14 into the mold, arranging the forming material in the mold (the step of inserting the resistor element can also take place after the step of arranging the forming material, depending on the molding procedure being used), and molding the plate with the resistor element 14 embedded inside it.

In this way, the resistor element 14 is locked with the second part 16 completely surrounded, embedded, in the mass of the monolithic structure of plate 14.

For example, the forming mold can be a metal sintering mold. Note that sintering can take place with powdered metal inserted into the forming mold, or for example by sintering two or more metal half-plates, for example, with a suitable mold for the resistor element, between which the resistor element is arranged and which are pressed against each other at the sintering pressure.

Alternatively, the mold can be a metal casting mold.

The resistor element 14 can have a linear shape, for example, in the form of a single- or multi-turn coil, in which the ends of the coil, which are external to the monolithic structure of the plate 11, form the first part 15 of the resistor element, i.e., the electrical terminals 15A for connection to the power source.

In practice, a channel is provided inside the monolithic structure of the plate, having a pair of holes on the outer surface of the plate for the electrical terminals 15A to exit.

In general, the resistor element may include one or more resistance wires (heated by the Joule effect), possibly suitably electrically insulated through, for example, a dielectric insulation. The electrical insulator can be a layer, or a sheath, that wraps the one or more resistance wires. The material of the electrical insulator can be chosen from typically known ones such as mica, Bakelite, glass, polyethylene, and polymeric materials.

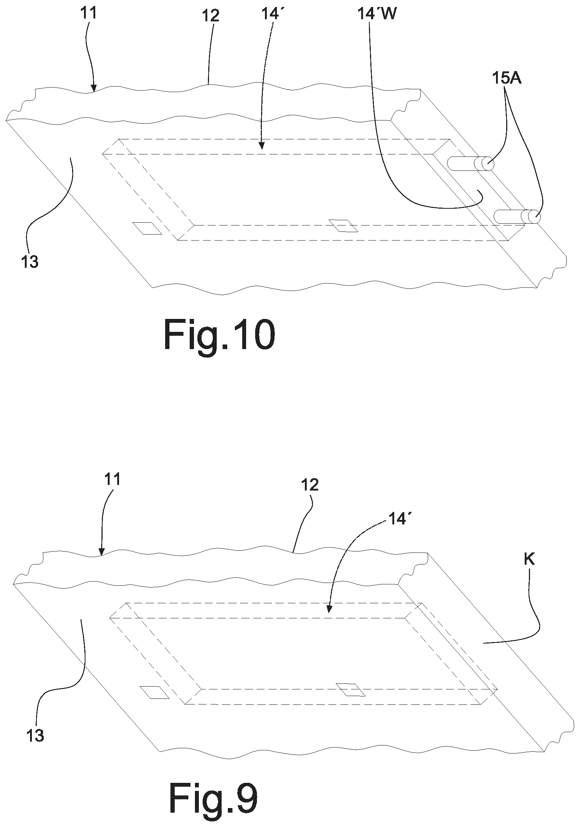

Figs. 9 and 10 show the cases of a resistor element other than a coil, for example in the form of a rectangular resistor, here indicated with the reference number 14', such as a ceramic plate (or, if necessary, a cylindrical resistor, such as a cartridge resistor), which may be completely embedded in the plate monolithic structure, i.e., which has the whole external heat-transmitting surface completely embedded in the plate, as in Fig.9 (obviously with the electrical terminals, not shown here, protruding from the monolithic structure of the plate), or which may have a surface portion 14'W that is external to the monolithic structure, as in Fig.10. For example, the resistor element 14' of Figs.9 and 10 has a resistive member embedded within a ceramic body. More particularly, the resistor element has at least one resistive member in the form of a resistive filament embedded in a ceramic body that is in turn coated by a ceramic insulation, preferably made of ceramic fiber. The overall shape of the resistor element is for example a flat parallelepiped with a rectangular base. A resistor element 14 of this type is, for example, a ceramic-insulated flat heater model Z.45 from the company Z.R.E. Electric Heaters.

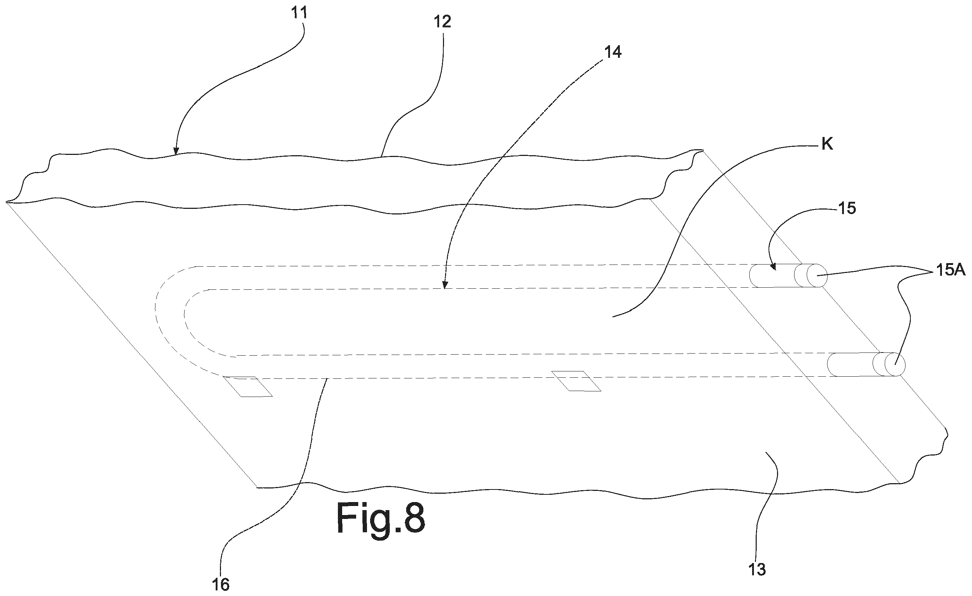

In the case of Figs.8 and 9, between the outer side of the plate, e.g., the end edge 11C on which the electrical terminals 15A of the resistor element 14 (14') are provided, and a portion of the resistor body (i.e., the one in charge of heat transmission) of the resistor element 14 (14'), a portion K of the monolithic structure of the plate 11 is interposed, which in practice "stops" the housing of the resistor element in the plate, i.e., prevents thew hypothetical movement of the second part toward the outer side. In practice, the plate monolithic structure forms an undercut K for a portion of the second part 16 of the resistor element 14 (14') in the direction toward the outer side 11C on which there is at least one portion of the first electrical connection part 15 of the resistor element 14.

In the examples shown in the figures, the electrical terminals 15A exit from the side peripheral end edge. Obviously, the exit for these terminals can be realized in the most convenient position, for example on the inner face 13 (i.e., the one opposite to the outer sealing face) or on a side edge 11A-11B or a lower or upper edge 11C of the plate. The electrical terminals may obviously be provided on respective portions of the plate that are different from each other (e.g. side edge and inner face 13).

Each heating plate 11 may have one or more holes for housing the mentioned temperature sensors 61, such as thermocouples, for plate temperature measurement. For example, a hole can be made blind starting from a side edge 11A-11B or an upper edge 11C of the plate 11.

In some embodiments, not shown in the figures, thermally insulating material is provided on the face of the sealing members 10 or of the heating plates 11 that do not face the packages C. For example, the thermally insulating material can be applied to the inner face 13 of the sealing members 10 and/or to the two side edges 11A-11B of the first and the last sealing members 10 of the opposite operating sides 103, delimiting the feed channel 104. This isolates from the heat produced by the sealing members 10, or in general by the heating plates 11, those machine components that do not need to heat up or, in general, that are not directly involved in the sealing of packages C, such as the outer face 12 of the heating plates 11. Therefore, there is an increase in the efficiency of the sealing member 10 which requires less energy for sealing the packages C due to less heat loss.

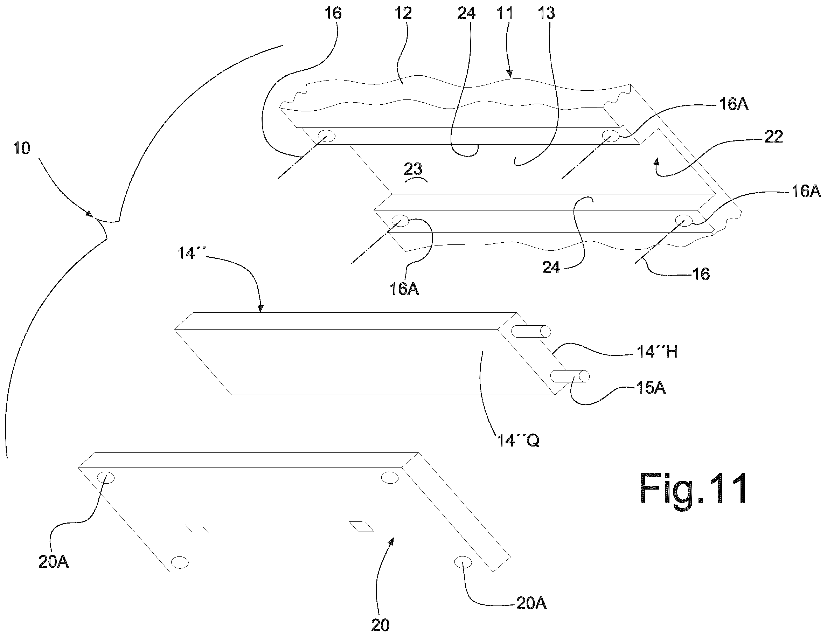

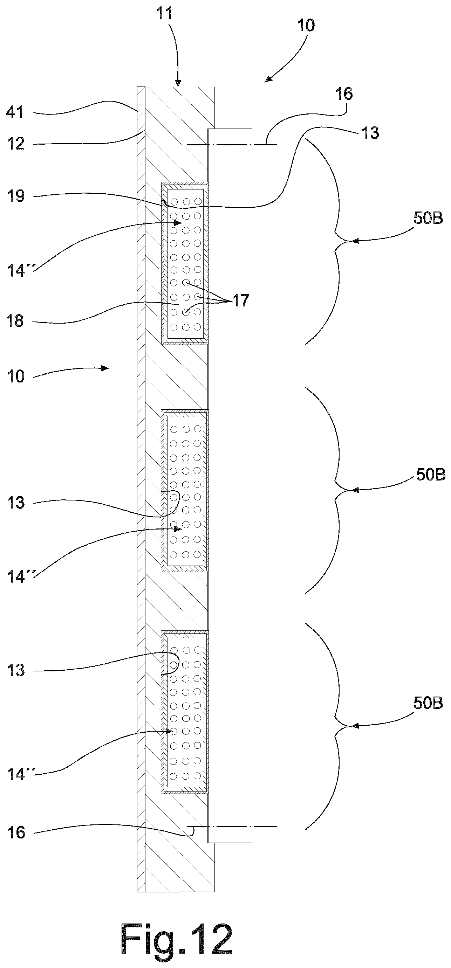

In a second innovative example, shown in Figs. 11 and 12, the resistor elements, indicated with the reference number 14", are adapted to contact the inner face 13 of the heating plate 11, with a closing body 20 arranged at the opposite side of the heating plate 11 relative to the resistor element 14".

Fig. 11 is an exploded view of a portion of plate 11 with a resistor element 14" associated therewith. In this case, the sealing member 10 includes one single closing body 20 arranged opposite the heating plate 11 with respect to the resistor element 14. In these examples, adequately, the closing body is made of thermal insulating material, such as: resins, plastics, polymeric or elastomeric materials, mineral or glass fiber materials, resins (e.g., phenolic, epoxy, silicone, polyurethane resins), glass (e.g., cellular type), aerogels, or a combination thereof. This isolates from the heat produced by the resistor element 14" those machine components that do not need to heat up or, in general, that are not directly involved in the sealing of packages C, such as the outer face 12 of the heating plates 11. Therefore, there is an increase in the efficiency of the sealing member 10 which requires less energy for sealing the packages C due to less heat loss.

A plurality of reversible fasteners 16 connects the closing body 20 to the heating plate 11. In this example, the reversible fasteners 16 (schematized in the figures by means of a dash-dot line) take the form of screws gripped in respective holes 16A provided on the side of the plate 11 facing the body 20, and passing through the closing body 20 (e.g., through holes 20A), with the heads of the screws for instance abutting the closing body 20, so that the resistor element 14 is sandwiched between the closing body 20 and heating plate 11.

The resistor element 14" may have a flat conformation, for example rectangular, provided with two opposite rectangular flat faces 30 and 31, adapted to face the inner face 13 of the heating plate 11 and the closing body 20 respectively. In other configurations, the resistor element 14 may have a different conformation, for example cylindrical.

The heating plate 11 includes a pocket 22 counter-shaped to the resistor element 14 to house it.

The pocket 22 is provided substantially completely on the heating plate 11 and includes a bottom defining a surface 23 (essentially the inner face 13 of the heating plate 11) of contact with the face 14"H of the resistor element 14" and sides defined on buttresses 24 of containment of the resistor element, preferably in contact with this latter. The holes 16A for the screws 16 are drilled on the buttresses 24, for example. If the resistor 14" has a rectangular, or flat shape, the surface 23 is flat so that it contacts the face 14"H, that in this case is also flat, of the resistor element 14". This ensures the perfect contact between the above mentioned two surfaces so as to have the best heat conduction between the resistor 14" and the inner face 13 of the heating plate 11. Additionally, in this configuration, there are not no-contact zones between the resistor 14" and the inner face 13 of the heating plate 11, so as to ensure perfect heat dissipation, increasing heating efficiency and preventing overheating of the resistor 14", and thus the potential damage thereof. A further advantage is that the heat generated by the rectangular resistor 14" on the inner face 13 of the heating plate 11 is much more evenly and well distributed along the sealing surface of the plurality of sealing members 10 than in the prior-art sealing plates.

The resistor element 14" is inserted into pocket 22, with one rectangular face 14"H thereof in contact (preferably direct contact) with the flat surface 23 of the pocket 22. Preferably, the sides of the resistor element 14" can be in direct contact, e.g. by slight interference, with the buttresses 24.

The fastening screws 16 allow to push the heating plate 11 and the closing body 20 onto opposite sides/faces 14"H, 14"Q of the resistor element 14", so that a real contact is guaranteed at least between the plate 11 and the resistor element 14" (e.g. the resistor element 14" can slightly protrude from the pocket 22 with its face 14"Q, so that the closing body 20 is in contact with that face 14"Q).

Each heating plate 11 may have one or more holes for housing respective temperature sensors 61, such as thermocouples, for temperature measurement.

Fig.12 shows a cross-section of a sealing member 10 with a plate 11 according to the structure described above. In this example only a single closing body 20 is shown for all the resistor elements 14 of a plate 11.

Appropriately, the resistor element 14" (but also 14') has (see the schematic cross-section of Figure 12) a resistive member integrated within a ceramic body. More in particular, the resistor element 14" has at least one resistive member in the form of one (or more) resistive filament 17 embedded in a ceramic body 18 that is in turn coated by a ceramic insulation 19, for example made of ceramic fiber.

The overall shape of the resistor element is for example a flat parallelepiped with a rectangular base.

A resistor element 14" (but also 14') usable according to the present invention is, for example, a ceramic-insulated flat heater model Z.45 from the company Z.R.E. Electric Heaters.

The resistor element 14" has a pair of electric terminals 15A operationally connected to the resistive filament 17 and wired to a power source. It is clear that, instead of electrical terminals, wires can be provided directly coming out of the resistor element 14.

In this example, the electrical terminals 21 exit the side peripheral end edge of the plate. Obviously, the exit for these terminals can be realized in the most convenient position, for example, on the flat face 14"Q of the resistor element facing the closing body 20.

It is understood that what is illustrated purely represents possible non-limiting embodiments of the invention, which may vary in forms and arrangements without departing from the scope of the concept on which the invention is based. Any reference numerals in the appended claims are provided for the sole purpose of facilitating the reading thereof in the light of the description above and the accompanying drawings and do not in any way limit the scope of protection.

## Claims

1. A sealing machine (100) for sealing packages (C) of products wrapped in films provided with at least one heat-sealable part, the sealing machine (100) comprising
- a feed channel (104) for the products wrapped in films;
- on at least one side (103) of the feed channel (104), at least two sealing bands,
- for each sealing band (50A, 50B), at least one resistor element (14) adapted to heat the sealing band (50A, 50B),
- a control unit (60) operationally connected to the resistor elements (14), adapted to enable power supply of the resistor elements (14) of the sealing bands (50A, 50B),
**characterized in that** said at least two sealing bands are specifically a lower sealing band (50A) and an upper sealing band (50B) arranged at a greater height than the lower sealing band (50A), both extending parallel to the feeding direction (X) of the products in the feed channel (104); said control unit (60) being adapted to enable power supply of the resistor elements (14) of the sealing bands (50A, 50B), so as to heat a single band or multiple bands simultaneously depending on the height of the sealing face to be obtained.

2. The sealing machine (100) of claim 1, wherein at least one side (103) of the feed channel (104) includes at least one sealing member (10) provided with at least one portion (51A', 51B') of heating plate (11), with which there is associated at least one resistor element (14) adapted to heat the heating plate portion (51A', 51B'), and wherein the at least one heating plate portion (51A', 51B') defines a respective portion of sealing band (50A, 50B).

3. The sealing machine (100) of claim 2, wherein at least one side (103) of the feed channel (104) comprises a plurality of sealing members (10) arranged side by side and successively along the feed channel (104), on each sealing member (10) being defined a respective portion (51A', 51B') of sealing band (50A, 50B), so that each sealing member (10) comprises at least one portion of lower sealing band (50A) and at least one portion of upper sealing band (50B).

4. The sealing machine (100) of claim 2, wherein at least one side (103) of the feed channel (104) comprises a single sealing member (10) extending along the feed channel (104), the sealing bands (50A, 50B) being defined on the single sealing member (10).

5. The sealing machine (100) of any one of claims 2 to 4, wherein said at least one sealing member (10) comprises a single heating plate (11), with which a plurality of resistor elements (14) is associated.

6. The sealing machine (100) of any one of claims 2 to 4, wherein said at least one sealing member (10) comprises a plurality of stacked heating plates (11), the heating plates (11) forming the sealing bands (50A, 50B); at least one resistor element (14) being associated with each heating plate (11).

7. The sealing machine (100) of one or more of claims 2 to 6, comprising one or more heating plates (11) and a plurality of resistor elements (14) associated with respective portions (51A', 51B', 51C') of one or more heating plates (11), the resistor elements (14) being arranged in a matrix along the at least one side (103) of the feed channel (104), wherein the resistor elements (14) of a row of the matrix distribution correspond to the resistor elements (14) operating in a respective sealing band (50A, 50B, 50C).

8. The sealing machine (100) of one or more of the preceding claims, wherein three stacked sealing bands are provided on at least one side (103) of the feed channel (104), specifically a lower sealing band (50A), an upper sealing band (50B) arranged at a greater height than the lower sealing band (50A), and an intermediate sealing band (50C) arranged at a height between the lower (50A) and the upper sealing bands (50B).

9. The sealing machine (100) of one or more of the preceding claims, comprising at least one temperature sensor (61), preferably at least one temperature sensor (61) for each sealing band (50A, 50B, 50C).

10. The sealing machine (100) of one or more of the preceding claims, wherein both sides (103) of the feed channel (104) comprise the stacked sealing bands (50A, 50B, 50C).

11. The sealing machine (100) of one or more of claims 2 to 10, wherein the at least one sealing member (10) is fastened to a support structure (106), preferably through the interposition of elastic means (107) adapted to act in a direction transverse (Y) to the feeding direction (X) along the channel (104), so that the at least one sealing member (10) is adapted to push the products (C) moving along the channel (104) according to the transverse direction (Y).

12. The sealing machine (100) of one or more of claims 2 to 11, wherein the at least one sealing member (10) comprises a front face, facing the center of the feed channel (104), and an opposite back face, at least one resistor element (14) associated with the sealing member (10) including at least one electrical connection terminal (15A) protruding from the opposite back face, or from a side edge (11A, 11B) or a top edge (11C) of the sealing member (10) or of the heating plate portion (11).

13. The sealing machine (100) of one or more of the preceding claims, wherein the control unit (60) is so programmed as to enable power supply (S) of the resistor elements (14) of the sealing bands (50A, 50B, 50C), so as to heat, depending on the height of the packages (C) to be sealed,
- only the lower sealing band (50A), or
- multiple sealing bands (50A, 50C, 50B) at the same time, arranged adjacent over one another, including the lower sealing band (50A).

14. The sealing machine (100) of one or more of the preceding claims, including, for the at least one side (103) of the feed channel (104), an interface element (40) arranged between the sealing bands (50A, 50B, 50C) and the part of the package (C) to be sealed; the interface element (40) being preferably movable along the package feeding direction (X); the interface element (40) is preferably a belt (41) closed in a loop and driven between guide members (42); the belt (41) is preferably a low friction belt, for example a Teflon-coated belt.

15. The sealing machine (100) of one or more of the preceding claims, comprising a handling table (102) for package (C) handling and two opposite operating sides (103) that delimit, with the handling table (102), the feed channel (104), within which the packages of products wrapped in films (C) move forward; the handling table (102) is preferably an active table, i.e. it moves to move the packages (C), the handling table (102) preferably consists of the upper or lower section (105A) of a conveyor belt (105).

16. The sealing machine (100) of one or more of the preceding claims, wherein at least one sealing member (10) comprises:
- a heating plate (11) with monolithic metal structure, preferably provided with an outer face (12) adapted to face the package part to be sealed,
- at least one resistor element (14) comprising a first electrical connection part (15) and a second heating part (16),
wherein the at least one resistor element (14) is embedded, at least as regards the second part (16), in the monolithic structure of the heating plate (11), wherein the monolithic structure of the plate (11) is completely in contact with the second part (16) of the resistor element (14).

17. The sealing machine (100) of one or more of claims 1 to 15, wherein at least one sealing member (10) comprises:
- at least one heating plate (11) provided with an outer face (12), adapted to face the package part to be sealed, and an opposite inner face (13),
- at least one resistor element (14) adapted to touch the inner face (13) of the heating plate (11),
- one closing body (20) arranged opposite the heating plate (11) with respect to the resistor element (14),
- at least one reversible fastener (16) between the heating plate (11) and the closing body (20), so that the at least one resistor element (14) is sandwiched between the closing body (20) and the heating plate (11).

18. A sealing method for sealing packages (C) of products wrapped in films provided with at least one heat-sealable part, the method providing for the use of a sealing machine (100) for sealing packages (C) of products wrapped in films provided with at least one heat-sealable part, the machine (100) including
- a feed channel (104) for the products wrapped in films;
- on at least one side (103) of the feed channel (104), at least two sealing bands, specifically a lower sealing band (50A) and an upper sealing band (50B) arranged at a greater height than the lower sealing band (50A), both extending parallel to the feeding direction (X) of the products in the feed channel (104),
- for each sealing band (50A, 50B), at least one resistor element (14) adapted to heat the sealing band (50A, 50B),
- a control unit (60) operationally connected to the resistor elements (14), adapted to enable power supply of the resistor elements of the sealing bands (50A, 50B),
the method comprising the steps of
- identifying the size of a set of packages (C) to be sealed,
- setting, in the control unit (60), the number of sealing bands (50A, 50B, 50C) to be electrically supplied, wherein the setting allows to supply electrical power to only one sealing band (50A) or to multiple sealing bands (50A, 50B, 50C),
- feeding the channel (104) with packages (C) to be sealed.

19. The sealing method of the preceding claim, wherein the control unit (60) is so programmed as to enable power supply (S) of the resistor elements (14) of the sealing bands (50A, 50B, 50C), so as to heat, depending on the height of the packages (C) to be sealed:
- only the lower sealing band (50A), or
- multiple sealing bands (50A, 50C, 50B) at the same time, arranged adjacent over one another, including the lower sealing band (50A).

## Patentansprüche

1. Siegelmaschine (100) zum Versiegeln von Packungen (C) für Produkte, die in Folien eingewickelt sind, die mit mindestens einem heißsiegelbaren Teil versehen sind, wobei die Siegelmaschine (100) umfasst
- einen Zuführkanal (104) für die in Folien eingewickelten Produkte;
- an mindestens einer Seite (103) des Zuführkanals (104) mindestens zwei Siegelbänder,
- für jedes Siegelband (50A, 50B) mindestens ein Widerstandselement (14), das dazu ausgelegt ist, das Siegelband (50A, 50B) zu erwärmen,
- eine Steuereinheit (60), die funktionsmäßig mit den Widerstandselementen (14) verbunden ist und dazu ausgelegt ist, die Stromversorgung der Widerstandselemente (14) der Siegelbänder (50A, 50B) zu ermöglichen,
**dadurch gekennzeichnet, dass** die mindestens zwei Siegelbänder insbesondere ein unteres Siegelband (50A) und ein oberes Siegelband (50B), das in größerer Höhe als das untere Siegelband (50A) angeordnet ist, sind, wobei sich beide parallel zur Förderrichtung (X) der Produkte im Zuführkanal (104) erstrecken; wobei die Steuereinheit (60) dazu ausgelegt ist, die Stromversorgung der Widerstandselemente (14) der Siegelbänder (50A, 50B) zu ermöglichen, um je nach der Höhe der zu erzielenden Siegelfläche ein einzelnes Band oder mehrere Bänder gleichzeitig zu erwärmen.

2. Siegelmaschine (100) nach Anspruch 1, wobei mindestens eine Seite (103) des Zuführkanals (104) mindestens ein Siegelelement (10) umfasst, das mit mindestens einem Abschnitt (51A', 51B') einer Heizplatte (11) versehen ist, dem mindestens ein Widerstandselement (14) zugeordnet ist, das dazu ausgelegt ist, den Heizplattenabschnitt (51A', 51B') zu erwärmen, und wobei der mindestens eine Heizplattenabschnitt (51A', 51B') einen jeweiligen Abschnitt des Siegelbands (50A, 50B) definiert.

3. Siegelmaschine (100) nach Anspruch 2, wobei mindestens eine Seite (103) des Zuführkanals (104) eine Vielzahl von Siegelelementen (10) umfasst, die nebeneinander und nacheinander entlang des Zuführkanals (104) angeordnet sind, wobei an jedem Siegelelement (10) ein jeweiliger Abschnitt (51A', 51B') des Siegelbandes (50A, 50B) definiert ist, so dass jedes Siegelelement (10) mindestens einen Abschnitt des unteren Siegelbandes (50A) und mindestens einen Abschnitt des oberen Siegelbandes (50B) umfasst.

4. Siegelmaschine (100) nach Anspruch 2, wobei mindestens eine Seite (103) des Zuführkanals (104) ein einzelnes Siegelelement (10) umfasst, das sich entlang des Zuführkanals (104) erstreckt, wobei die Siegelbänder (50A, 50B) an dem einzelnen Siegelelement (10) ausgebildet sind.

5. Siegelmaschine (100) nach einem der Ansprüche 2 bis 4, wobei das mindestens eine Siegelelement (10) eine einzelne Heizplatte (11) umfasst, der eine Vielzahl von Widerstandselementen (14) zugeordnet ist.

6. Siegelmaschine (100) nach einem der Ansprüche 2 bis 4, wobei das mindestens eine Siegelelement (10) mehrere übereinander angeordnete Heizplatten (11) umfasst, wobei die Heizplatten (11) die Siegelbänder (50A, 50B) bilden; wobei jeder Heizplatte (11) mindestens ein Widerstandselement (14) zugeordnet ist.

7. Siegelmaschine (100) nach einem oder mehreren der Ansprüche 2 bis 6, umfassend eine oder mehrere Heizplatten (11) und eine Vielzahl von Widerstandselementen (14), die jeweiligen Abschnitten (51A', 51B', 51C') einer oder mehrerer Heizplatten (11) zugeordnet sind, wobei die Widerstandselemente (14) in einer Matrix entlang der mindestens einen Seite (103) des Zuführkanals (104) angeordnet sind, wobei die Widerstandselemente (14) einer Reihe der Matrixanordnung den Widerstandselementen (14) entsprechen, die in einem jeweiligen Siegelband (50A, 50B, 50C) arbeiten.

8. Siegelmaschine (100) nach einem oder mehreren der vorstehenden Ansprüche, wobei an mindestens einer Seite (103) des Zuführkanals (104) drei übereinanderliegende Siegelbänder vorgesehen sind, nämlich ein unteres Siegelband (50A), ein oberes Siegelband (50B), das in größerer Höhe als das untere Siegelband (50A) angeordnet ist, und ein mittleres Siegelband (50C), das in einer Höhe zwischen dem unteren (50A) und dem oberen Siegelband (50B) angeordnet ist.

9. Siegelmaschine (100) nach einem oder mehreren der vorstehenden Ansprüche, umfassend mindestens einen Temperatursensor (61), vorzugsweise mindestens einen Temperatursensor (61) für jedes Siegelband (50A, 50B, 50C).

10. Siegelmaschine (100) nach einem oder mehreren der vorstehenden Ansprüche, wobei beide Seiten (103) des Zuführkanals (104) die übereinander angeordneten Siegelbänder (50A, 50B, 50C) umfassen.

11. Siegelmaschine (100) nach einem oder mehreren der Ansprüche 2 bis 10, wobei das mindestens eine Siegelelement (10) an einer Tragkonstruktion (106) befestigt ist, vorzugsweise unter Zwischenschaltung elastischer Mittel (107), die so ausgelegt sind, dass sie in einer Richtung (Y) quer zur Zuführrichtung (X) entlang des Kanals (104) wirken, sodass das mindestens eine Siegelelement (10) dazu ausgelegt ist, die sich entlang des Kanals (104) bewegenden Produkte (C) in der Querrichtung (Y) zu drücken.

12. Siegelmaschine (100) nach einem oder mehreren der Ansprüche 2 bis 11, wobei das mindestens eine Siegelelement (10) eine der Mitte des Zuführkanals (104) zugewandte Vorderseite sowie eine gegenüberliegende Rückseite umfasst, wobei mindestens ein dem Siegelelement (10) zugeordnetes Widerstandselement (14) mindestens einen elektrischen Verbindungsanschluss (15A) aufweist, der aus der gegenüberliegenden Rückseite oder aus einer Seitenkante (11A, 11B) oder einer Oberkante (11C) des Siegelelements (10) oder des Heizplattenabschnitts (11) herausragt.

13. Siegelmaschine (100) nach einem oder mehreren der vorstehenden Ansprüche, wobei die Steuereinheit (60) so programmiert ist, dass sie die Stromversorgung (S) der Widerstandselemente (14) der Siegelbänder (50A, 50B, 50C) so steuert, um je nach Höhe der zu versiegelnden Packungen (C)
- entweder nur das untere Siegelband (50A) oder
- mehrere, nebeneinander übereinander angeordnete Siegelbänder (50A, 50C, 50B) gleichzeitig, einschließlich des unteren Siegelbands (50A), zu erwärmen.

14. Siegelmaschine (100) nach einem oder mehreren der vorstehenden Ansprüche, die für die mindestens eine Seite (103) des Zuführkanals (104) ein Schnittstellenelement (40) umfasst, das zwischen den Siegelbändern (50A, 50B, 50C) und dem zu versiegelnden Teil der Packung (C) angeordnet ist; wobei das Schnittstellenelement (40) vorzugsweise entlang der Packungszuführrichtung (X) bewegbar ist; das Schnittstellenelement (40) vorzugsweise ein zu einer Schleife geschlossener Riemen (41) ist, der zwischen Führungselementen (42) angetrieben wird; wobei der Riemen (41) vorzugsweise ein reibungsarmer Riemen ist, beispielsweise ein teflonbeschichteter Riemen.

15. Siegelmaschine (100) nach einem oder mehreren der vorstehenden Ansprüche, umfassend einen Handhabungstisch (102) zur Handhabung der Packungen (C) und zwei gegenüberliegende Arbeitsseiten (103), die zusammen mit dem Handhabungstisch (102) den Zuführkanal (104) begrenzen, in dem sich die in Folien eingewickelten Produktpackungen (C) vorwärts bewegen; wobei der Handhabungstisch (102) vorzugsweise ein aktiver Tisch ist, d. h., er bewegt sich, um die Packungen (C) zu transportieren, wobei der Handhabungstisch (102) vorzugsweise aus dem oberen oder unteren Abschnitt (105A) eines Förderriemens (105) besteht.

16. Siegelmaschine (100) nach einem oder mehreren der vorstehenden Ansprüche, wobei mindestens ein Siegelelement (10) umfasst:
- eine Heizplatte (11) mit monolithischer Metallstruktur, die vorzugsweise mit einer Außenfläche (12) versehen ist, die so ausgelegt ist, dass sie dem zu versiegelnden Packungsteil zugewandt ist,
- mindestens ein Widerstandselement (14), das einen ersten elektrischen Verbindungsabschnitt (15) und einen zweiten Heizabschnitt (16) umfasst,
wobei das mindestens eine Widerstandselement (14) zumindest hinsichtlich des zweiten Abschnitts (16) in die monolithische Struktur der Heizplatte (11) eingebettet ist, wobei die monolithische Struktur der Platte (11) vollständig mit dem zweiten Abschnitt (16) des Widerstandselements (14) in Kontakt steht.

17. Siegelmaschine (100) nach einem oder mehreren der Ansprüche 1 bis 15, wobei mindestens ein Siegelelement (10) umfasst:
- mindestens eine Heizplatte (11), die mit einer Außenseite (12), die so ausgelegt ist, dass sie dem zu versiegelnden Packungsteil zugewandt ist, und einer gegenüberliegenden Innenseite (13) versehen ist,
- mindestens ein Widerstandselement (14), das so ausgelegt ist, dass es die Innenseite (13) der Heizplatte (11) berührt,
- einen Verschlusskörper (20), der in Bezug auf das Widerstandselement (14) gegenüber der Heizplatte (11) angeordnet ist,
- mindestens ein umkehrbarer Verschluss (16) zwischen der Heizplatte (11) und dem Verschlusskörper (20), sodass das mindestens eine Widerstandselement (14) zwischen dem Verschlusskörper (20) und der Heizplatte (11) eingeklemmt ist.

18. Verfahren zum Versiegeln von Packungen (C) für in Folien eingewickelte Produkte, die mit mindestens einem heißsiegelbaren Teil versehen sind, wobei das Verfahren die Verwendung einer Siegelmaschine (100) zum Versiegeln von Packungen (C) für in Folien eingewickelte Produkte vorsieht, die mit mindestens einem heißsiegelbaren Teil versehen sind, wobei die Maschine (100) umfasst
- einen Zuführkanal (104) für die in Folien eingewickelten Produkte;
- an mindestens einer Seite (103) des Zuführkanals (104) mindestens zwei Siegelbänder, nämlich ein unteres Siegelband (50A) und ein oberes Siegelband (50B), das in größerer Höhe als das untere Siegelband (50A) angeordnet ist, wobei sich beide parallel zur Förderrichtung (X) der Produkte im Zuführkanal (104) erstrecken,
- für jedes Siegelband (50A, 50B) mindestens ein Widerstandselement (14), das dazu ausgelegt ist, das Siegelband (50A, 50B) zu erwärmen,
- eine Steuereinheit (60), die funktionsmäßig mit den Widerstandselementen (14) verbunden ist und dazu ausgelegt ist, die Stromversorgung der Widerstandselemente der Siegelbänder (50A, 50B) zu ermöglichen,
wobei das Verfahren die folgenden Schritte umfasst:
- Ermitteln der Größe eines Satzes von zu versiegelnden Packungen (C),
- Einstellen der Anzahl der elektrisch zu versorgenden Siegelbänder (50A, 50B, 50C) in der Steuereinheit (60), wobei das Einstellen die Versorgung nur eines Siegelbands (50A) oder mehrerer Siegelbänder (50A, 50B, 50C) mit elektrischer Energie ermöglicht,
- Zuführen der zu versiegelnden Packungen (C) in den Kanal (104).

19. Versiegelungsverfahren nach dem vorstehenden Anspruch, wobei die Steuereinheit (60) so programmiert ist, dass sie die Stromversorgung (S) der Widerstandselemente (14) der Siegelbänder (50A, 50B, 50C) so steuert, um je nach Höhe der zu versiegelnden Packungen (C)
- entweder nur das untere Siegelband (50A) oder
- mehrere Siegelbänder (50A, 50C, 50B), die nebeneinander übereinander angeordnet sind, gleichzeitig einschließlich des unteren Siegelbandes (50A) zu erwärmen.

## Revendications

1. Une machine de scellage (100) pour sceller des paquets (C) de produits enveloppés dans des films prévus avec au moins une partie pouvant être scellée à chaud, cette machine de scellage (100) comprenant
- un canal d'avancement (104) pour les produits enveloppés dans des films ;
- sur au moins un côté (103) du canal d'avancement (104), au moins deux bandes de scellage,
- pour chaque bande de scellage (50A, 50B), au moins un élément formant résistance (14) apte à chauffer la bande de scellage (50A, 50B),
- une unité de commande (60) connectée fonctionnellement aux éléments formant résistance (14), apte à permettre une alimentation en énergie des éléments formant résistance (14) des bandes de scellage (50A, 50B),
**caractérisée en ce qu'**au moins deux bandes de scellage sont précisément une bande de scellage inférieure (50A) et une bande de scellage supérieure (50B) agencée à une hauteur supérieure à celle de la bande de scellage inférieure (50A), les deux s'étendant parallèlement à la direction d'avancement (X) des produits dans le canal d'avancement (104) ; ladite unité de commande (60) étant apte à permettre une alimentation en énergie des éléments formant résistance (14) des bandes de scellage (50A, 50B), de façon à chauffer une bande unique ou de multiples bandes simultanément en fonction de la hauteur de la face de scellage à obtenir.

2. La machine de scellage (100) selon la revendication 1, dans laquelle au moins un côté (103) du canal d'avancement (104) inclut au moins un organe de scellage (10) pourvu d'au moins une partie (51A', 51B') de plaque chauffante (11), avec laquelle est associé au moins un élément formant résistance (14) apte à chauffer la partie de plaque chauffante (51A', 51B') et dans laquelle au moins une partie de plaque chauffante (51A', 51B') forme une partie respective de bande de scellage (50A, 50B).

3. La machine de scellage (100) selon la revendication 2, dans laquelle au moins un côté (103) du canal d'avancement (104) comprend une pluralité d'organes de scellage (10) agencés côte à côte et successivement le long du canal d'avancement (104), sur chaque organe de scellage (10) étant formée une partie respective (51A', 51B') de bande de scellage (50A, 50B), de sorte que chaque organe de scellage (10) comprend au moins une partie de bande de scellage inférieure (50A) et au moins une partie de bande de scellage supérieure (50B).

4. La machine de scellage (100) selon la revendication 2, dans laquelle au moins un côté (103) du canal d'avancement (104) comprend un unique organe de scellage (10) s'étendant le long du canal d'avancement (104), les bandes de scellage (50A, 50B) étant formées sur l'organe de scellage unique (10).

5. La machine de scellage (100) selon l'une quelconque des revendications 2 à 4, dans laquelle ledit ou lesdits organe(s) de scellage (10) comprend/comprennent une unique plaque chauffante (11) avec laquelle une pluralité d'éléments formant résistance (14) est associée.

6. La machine de scellage (100) selon l'une quelconque des revendications 2 à 4, dans laquelle ledit ou lesdits organe(s) de scellage (10) comprend/comprennent une pluralité de plaques de chauffage empilées (11), ces plaques de chauffage (11) formant les bandes de scellage (50A, 50B) ; au moins un élément formant résistance (14) étant associé avec chaque plaque chauffante (11).

7. La machine de scellage (100) selon l'une ou plusieurs des revendications 2 à 6, comprenant une ou plusieurs plaques de chauffage (11) et une pluralité d'éléments formant résistance (14) associés avec des parties respectives (51A', 51B', 51C') de l'une ou de plusieurs des plaques chauffantes (11), les éléments formant résistance (14) étant agencés dans une matrice le long du ou des côté(s) (103) du canal d'avancement (104), dans lequel les éléments formant résistance (14) d'une rangée de la distribution de la matrice correspondent aux éléments formant résistance (14) fonctionnant dans une bande de scellage respective (50A, 50B, 50C).

8. La machine de scellage (100) selon l'une ou plusieurs des revendications précédentes, dans laquelle trois bandes de scellage empilées sont prévues sur au moins un côté (103) du canal d'avancement (104), précisément une bande de scellage inférieure (50A), une bande de scellage supérieure (50B) agencée à une hauteur supérieure à celle de la bande de scellage inférieure (50A) et une bande de scellage intermédiaire (50C) agencée à une hauteur entre les bandes inférieure (50A) et supérieure (50B).

9. La machine de scellage (100) selon l'une ou plusieurs des revendications précédentes, comprenant au moins un capteur de température (61), de préférence au moins un capteur de température (61) pour chaque bande de scellage (50A, 50B, 50C).

10. La machine de scellage (100) selon l'une ou plusieurs des revendications précédentes, dans laquelle les deux côtés (103) du canal d'avancement (104) comprennent les bandes de scellage empilées (50A, 50B, 50C).

11. La machine de scellage (100) selon l'une ou plusieurs des revendications 2 à 10, dans laquelle au moins un organe de scellage (10) est fixé à une structure de support (106), de préférence par l'intermédiaire de moyens élastiques (107) aptes à agir dans une direction perpendiculaire (Y) à la direction d'avancement (X) le long du canal (104), de sorte que le ou les organe(s) de scellage (10) soi(en)t apte(s) à pousser les produits (C) se déplaçant le long du canal (104) suivant la direction perpendiculaire (Y).

12. La machine de scellage (100) selon l'une ou plusieurs des revendications 2 à 11, dans laquelle le ou les organe(s) de scellage (10) comprend/comprennent une face avant, faisant face au centre du canal d'avancement (104) et une face arrière opposée, au moins un élément formant résistance (14) associé avec l'organe de scellage (10) incluant au moins une borne de connexion électrique (15A) faisant saillie depuis la face arrière opposée ou depuis un bord latéral (11A, 11B) ou un bord supérieur (11C) de l'organe de scellage (10) ou de la partie de la plaque chauffante (11).

13. La machine de scellage (100) selon l'une ou plusieurs des revendications précédentes, dans laquelle l'unité de commande (60) est programmée de sorte à permettre une alimentation en énergie (S) des éléments formant résistance (14) des bandes de scellage (50A, 50B, 50C) de façon à chauffer, en fonction de la hauteur des paquets (C) à sceller,
- seulement la bande de scellage inférieure (50A), ou
- de multiples bandes de scellage (50A, 50C, 50B) au même moment, agencées de façon adjacente l'une au dessus de l'autre, en incluant la bande de scellage inférieure (50A).

14. La machine de scellage (100) selon l'une ou plusieurs des revendications précédentes, incluant, pour le ou les côté(s) (103) du canal d'avancement (104), un élément d'interface (40) agencé entre les bandes de scellage (50A, 50B, 50C) et la partie du paquet (C) à sceller ; l'élément formant interface (40) étant de préférence mobile le long de la direction d'avancement du paquet (X) ; l'élément formant interface (40) étant de préférence une bande (41) fermée en une boucle et entraînée entre des organes de guidage (42) ; la bande (41) étant de préférence une bande à faible friction, par exemple une bande revêtue de Téflon.

15. La machine de scellage (100) selon l'une ou plusieurs des revendications précédentes, comprenant une table de traitement (102) pour le traitement des paquets (C) et deux côtés fonctionnels opposés (103) qui délimitent, avec la table de traitement (102), le canal d'avancement (104), à l'intérieur duquel les paquets de produits enveloppés dans des films (C) se déplacent vers l'avant ; la table de traitement (102) est de préférence une table active, c'est-à-dire qu'elle se déplace pour déplacer les paquets (C), la table de traitement (102) étant de préférence constituée par la section supérieure ou inférieure (105A) d'une bande transporteuse (105).

16. La machine de scellage (100) selon l'une ou plusieurs des revendications précédentes, dans laquelle au moins un organe de scellage (10) comprend :
- une plaque chauffante (11) avec une structure métallique monolithique, de préférence pourvue d'une face extérieure (12) apte à faire face à la partie du paquet à sceller,
- au moins un élément formant résistance (14) comprenant une première partie de connexion électrique (15) et une deuxième partie chauffante (16),
le ou les élément(s) formant résistance (14) étant incorporé(s), au moins en ce qui concerne la deuxième partie (16), dans la structure monolithique de la plaque chauffante (11), la structure monolithique de la plaque (11) étant complètement en contact avec la deuxième partie (16) de l'élément formant résistance (14).

17. La machine de scellage (100) selon l'une ou plusieurs des revendications 1 à 15, dans laquelle au moins un organe de scellage (10) comprend :
- au moins une plaque chauffante (11) prévue avec une face externe (12) apte à faire face à la partie du paquet à sceller et une face interne opposée (13),
- au moins un élément formant résistance (14) apte à toucher la face interne (13) de la plaque chauffante (11),
- un corps de fermeture (20) agencé à l'opposé à la plaque chauffante (11) par rapport à l'élément formant résistance (14),
- au moins un élément de fixation réversible (16) entre la plaque chauffante (11) et le corps de fermeture (20), de sorte que le ou les éléments formant résistance (14) soi(en)t pris en sandwich entre le corps de fermeture (20) et la plaque chauffante (11).

18. Un procédé de scellage pour sceller de paquets (C) de produits enveloppés dans des films prévus avec au moins une partie pouvant être scellée à chaud, ce procédé prévoyant l'utilisation d'une machine de scellage (100) pour sceller des paquets (C) de produits enveloppés dans des films prévus avec au moins une partie pouvant être scellée à chaud, la machine (100) incluant :
- un canal d'avancement (104) pour les produits enveloppés dans des films ;
- sur au moins un côté (103) du canal d'avancement (104), au moins deux bandes de scellage, précisément un bande de scellage inférieure (50A) et une bande de scellage supérieure (50B) agencée à une hauteur supérieure à celle de la bande de scellage inférieure (50A), les deux s'étendant parallèlement à la direction d'avancement (X) des produits dans le canal d'avancement (104),
- pour chaque bande de scellage (50A, 50B), au moins un élément formant résistance (14) apte à chauffer la bande de scellage (50A, 50B),
- une unité de commande (60) connectée fonctionnellement aux éléments formant résistance (14), apte à permettre l'alimentation en énergie des éléments formant résistance des bandes de scellage (50A, 50B),
ce procédé comprenant les étapes consistant à
- identifier la taille d'un ensemble de paquets (C) à sceller,
- définir, dans l'unité de commande (60), le nombre de bandes de scellage (50A, 50B, 50C) à alimenter en électricité, la définition permettant de fournir de l'énergie électrique à seulement une bande de scellage (50A) ou à de multiples bandes de scellage (50A, 50B, 50C),
- alimenter le canal (104) avec des paquets (C) à sceller.

19. Le procédé de scellage selon la revendication précédente, dans lequel l'unité de commande (60) est programmée de façon à permettre une alimentation en énergie (S) des éléments formant résistance (14) des bandes de scellage (50A, 50B, 50C) de façon à chauffer, en fonction de la hauteur des paquets (C) à sceller :
- seulement la bande de scellage inférieure (50A), ou
- de multiples bandes de scellage (50A, 50C, 50B) en même temps, agencées de manière adjacente l'une au-dessus de l'autre, en incluant la bande de scellage inférieure (50A).
